# EUROPEAN PATENT APPLICATION

(11) **EP 4 173 744 A1**
(43) Date of publication of application: **03.05.2023**
(21) Application number: 21075016.2
(22) Date of filing: 27.10.2021
(51) Int. Cl.: B23B 13/08, B23B 13/12, B23B 31/26

(54) **INSERT PIPE UNIT FOR CNC - MACHINES**

(71) Applicant: Liekens, Henri, 5061 XT Oisterwijk (NL)
(72) Inventor: Liekens, Henri, 5061 XT Oisterwijk (NL)

(57) **Abstract**

Insert pipe unit (1) for CNC-machines for reducing vibrations and resonances by CNC-machine operations. The insert pipe unit (1) consists of an outer machine-handled steel pipe (5) with length L and diameter D. In said outer steel pipe (5) five filling rings (8) are provided at regular distances X to contain the machine bars (4, 41, 42, 43). The regular distances X are held by thin-walled pipes (5). This way you can reach a high production rate with the CNC-machine without vibrations and a high quality fitting.

## Description

The present invention concerns an insert pipe unit for CNC-machines, also called smart reduser , to reduce or eliminate vibrations and resonance for an accurate and fast producing of all kinds of workpieces or industrial components or parts out of feed bars or pipes with different cross sections or materials such as steel, aluminium, copper, plastic or wood etc., wherein the feeding of said bars or pipes into the CNC-machine takes place in the insert pipe unit put or placed in the central supply pipe , with ISO standard parameters, to the machining head with all kinds of tools of said CNC-machine.

### Background of the invention.

The state of the art does not include such an insert pipe unit and therefore in practice, there is a wide range of central supply pipes or self-made auxiliary internal pipes used in CNC-machines in order to obtain a stable bar for further machining. However, this has several drawbacks, because it is not possible to obtain a very precise machining of the industrial components or parts. Furthermore, a very high speed up to 3000 rpm is not possible due to the vibrations or resonance in the CNC-machine, which leads to damage of the machine. So, production speed is relatively low and therefore production costs are relatively high.

The aim of our invention is to overcome the mentioned drawbacks and to provide a solution in minimizing vibrations and resonance during the production of industrial components and parts with a common CNC-machine. This way we achieve a more accurate and faster (higher rpm) and higher production with the CNC-machine. Therefore, the insert pipe unit according to the invention used to reduce vibration and resonance during production procedures in CNC-machine is characterized in that said insert pipe unit is built up of a machine handled steel pipe with length L and an external diameter D and a wall thickness d and a tolerance fit P to said central supply or feed pipe of the CNC-machine, wherein one end of said steel pipe is provided with a flange with bore holes to screw on an entrance plate of the CNC-machine, wherein internally at regular distances X the synthetic filling rings with internal diameters fitting to said bars or pipes are provided with filling rings with a width B and are put at equal distances X in said steel pipe by another thin-walled length of steel pipe, wherein the filling rings are blocked at the steel pipe ends.

The advantage is, that in a limited period of time for machine handling and with a greater accuracy is created, so more machine parts can be produced in less time.

Furthermore the insert pipe unit according to the invention is further improved, characterized in that the length L of said insert pipe unit is between 800 mm and 1200 mm, preferably 1000 mm and mentioned tolerance fit P is between 0,03 mm and 0,07 mm, preferably 0,05 mm.

The advantage is, that the whole wall thickness of the feeding pipes of the CNC-machine is a lot in mechanically sense stronger against deformations caused by vibrations, or worse, strong against resonances in the CNC-machine.

Furthermore, the insert pipe unit according to the invention is further improved, wherein said number of filling rings with width B is between 3 and 8, preferably 5, wherein said width B of the filling rings is between 16 mm and 28 mm , preferably 22 mm and preferably 25 mm for the end filling rings.

The advantages are a good grip on the bars or pipes without vibrations and resonance during machine handling in the CNC-machine. The sliding movement of said bars towards the machining head is also improved as they only are supported by mentioned filling rings.

The embodiment of the present invention will now be described by way of example, with reference to the accompanying drawing with figures in which;
figure 1 shows a longitudinal section of the insert pipe unit according to the invention, placed in the central supply or feed pipe of the CNC-machine; and
figure 2 shows separately the longitudinal section of the insert pipe unit with a bar or pipe according to a preferred construction of the invention.

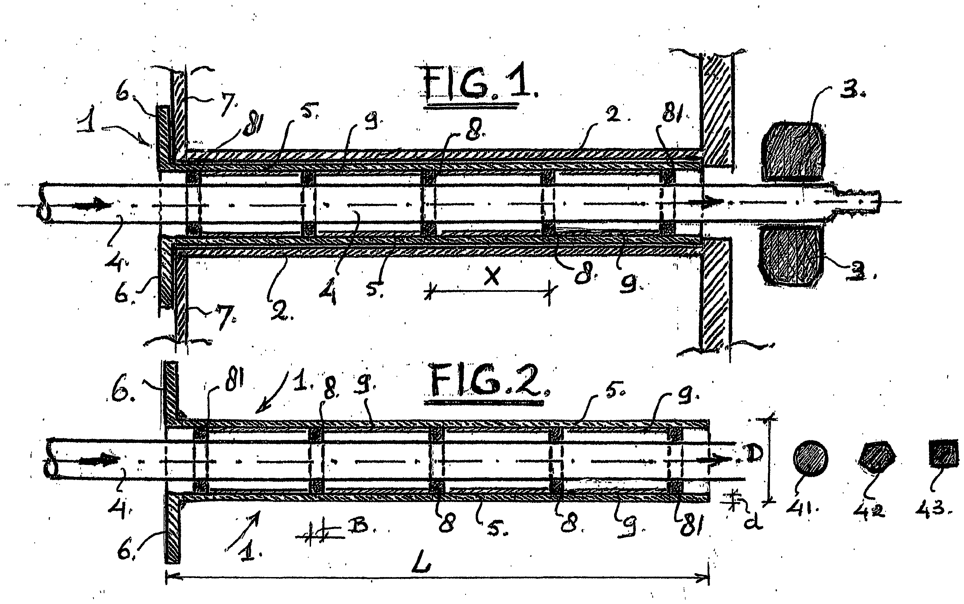

Figure 1 shows a longitudinal section of the insert pipe unit 1 with bar or pipe 4 in the central supply or feed pipe 2 of the CNC-machine with its machining head 3. Mentioned bar or pipe 4 can have various different cross sections as shown in the different bar cross sections 41, 42, 43 and even the pipes can have different contour cross sections.

Figure 2 shows the separate longitudinal section of the insert pipe unit 1 with a bar or pipe 4.

The insert pipe unit 1 is built up with an outer steel pipe 5 with length L and outer diameter D and wall thickness d. At the one end the insert pipe unit 1 is provided with a flange 6 in order to mount it on an entrance plate of the CNC-machine. Synthetic filling rings 8, 81 are provided at regular distances X in the outer steel pipe 5. These synthetic filling rings 8 can be produced for bars with cross sections 4, 41, 42, 43 and with any internal diameter. The regular distance X is provided with said thin-walled pieces of steel pipes 9.

However, it is obvious that modifications and/or additions can be made to the afore mentioned reducing pipe set, but these modifications shall remain within the field and scope of the invention.

## Claims

1. Insert pipe unit for CNC-machines, to reduce vibrations for an accurate and fast producing of all kinds of workpieces or industrial components or parts out of feed bars or pipes with different cross sections or materials such as steel, aluminium, copper, plastic or wood etc., wherein feeding of said bars into the CNC-machine takes place in the central supply or feed pipe, with ISO standard parameters, to the machining head with all kinds of tools, **characterized in that,** said insert pipe unit (1) is built up of a machine handled steel pipe (5) with length L and an external diameter D and a wall thickness d and a tolerance fit P to said central supply or feed pipe (2) of the CNC-machine , wherein one end of said steel pipe (5) is provided with a flange (6) with bore holes to mount on an entrance plate (7) of the CNC-machine, wherein internally at regular distances X synthetic filling rings (8) with internal diameters fitting to said bars or pipes (4) are provided, which filling rings (8) with width B are put at equal distances X in said steel pipe (5) by another thin-walled piece of steel pipe (9), wherein the filling rings are blocked at the steel pipe ends.

2. Insert pipe unit as defined in claim 1, **wherein** the length L of said steel pipe (5) is between 800 mm and 1200 mm, preferably 1000 mm and mentioned tolerance fit P is between 0,03 mm and 0,07 mm, preferably 0,05 mm.

3. Insert pipe unit as defined in claim 1, **wherein** said wall thickness d is between 5 mm and 9 mm, preferably 7 mm.

4. Insert pipe unit as defined in claim 1, **wherein** said number of filling rings (8) with width B is between 3 and 8, preferably 5.

5. Insert pipe unit as defined in claim 1 and 4, **wherein** the width B of the filling rings (8) is between 16 m and 23 mm, preferably 20 mm for the intermediate filling rings (8) and between 23 mm and 28 mm, preferably 25 mm for the end filling rings (81).

6. Insert pipe unit as defined in claim 1, **wherein** the circumference of cross sections of said bars (4, 41,42,43) are circular, hexagonal, square etc.

7. Insert pipe unit as defined in claim 1 and 6, **wherein** said circumference of the cross section fits to an adapted inner diameter of the filling rings (8, 81).
